# FASCICULE DE BREVET EUROPEEN

(11) **EP 2 135 759 B1**
(45) Date de publication et mention de la délivrance du brevet: **26.12.2012**
(21) Numéro de dépôt: 09163255.4
(22) Date de dépôt: 19.06.2009
(51) Int. Cl.: B60H 1/08

(54) **Installation de ventilation, de chauffage et/ou de climatisation d'un véhicule comprenant au moins un échangeur thermique à l'intérieur duquel circule un fluide caloporteur**
Kraftfahrzeugkilmaanlage mit zumindest einem Wärmetauscher, in welchem Kältemittel läuft
Heating, ventilating and/or air conditioning installation of a vehicle which comprises at least one heat exchanger inside which circulates a fluid

(30) Priorité: 20.06.2008 FR 0803445
(43) Date de publication de la demande: 23.12.2009
(73) Titulaire: Valeo Systemes Thermiques, 78321 Le Mesnil Saint Denis Cedex (FR)
(72) Inventeur: Yahia, Mohamed, 75005 PARIS (FR); Neveu, Daniel, 91300, MASSY (FR)
(74) Mandataire: Léveillé, Christophe

(56) Documents cités:
- DE-A1-102006 042 788
- FR-A- 2 852 678
- US-B1- 6 178 929

## Description

### Domaine technique de l'invention.

La présente invention est du domaine des installations de ventilation, de chauffage et/ou de climatisation d'un habitacle d'un véhicule automobile. Elle a pour objet une telle installation comprenant au moins un échangeur thermique à l'intérieur duquel circule un fluide caloporteur.

### Etat de la technique.

Un véhicule automobile est couramment équipé d'une installation de ventilation, de chauffage et/ou de climatisation pour réguler les paramètres aérothermiques de l'air contenu à l'intérieur de l'habitacle du véhicule.

Une telle installation comprend un circuit de refroidissement du moteur du véhicule. Un premier fluide caloporteur, eau et/ou glycol notamment, circule à l'intérieur du circuit de refroidissement pour véhiculer la chaleur générée par le moteur auprès d'un premier échangeur thermique, tel qu'un radiateur sur l'air. Ce dernier est traversé par un premier flux d'air pour être réchauffé avant d'être délivré à l'intérieur de l'habitacle.

Une telle installation comprend aussi une boucle de climatisation pour refroidir un deuxième flux d'air préalablement à sa délivrance à l'intérieur de l'habitacle. Ladite boucle comprend une pluralité d'éléments à l'intérieur desquels circule successivement un fluide réfrigérant, tel qu'un fluide supercritique, dioxyde de carbone ou R744 notamment. Ces éléments comprennent au moins un compresseur, un deuxième échangeur thermique, couramment dénommé refroidisseur de gaz, éventuellement un échangeur de chaleur interne, un organe de détente, un évaporateur et éventuellement un accumulateur.

Le refroidisseur de gaz permet au fluide réfrigérant de se refroidir en cédant de la chaleur à un deuxième fluide caloporteur. Ce dernier est susceptible d'être indifféremment un gaz, air notamment, ou un liquide, eau et/ou glycol notamment.

Dans les deux cas susvisés, le fluide réfrigérant subit à l'intérieur de la boucle de climatisation un cycle thermodynamique couramment décrit dans un diagramme de Mollier. Il est connu de déduire de ce diagramme un coefficient de performance de ladite boucle, désigné par l'acronyme anglais « COP » et défini comme étant le rapport entre une puissance utile récupérée par le refroidisseur de gaz et une énergie consommée par le compresseur pour comprimer le fluide réfrigérant. Il est constamment recherché que le coefficient de performance « COP » soit le plus élevé possible, par exemple de l'ordre de 3 à 4, pour procurer à un utilisateur du véhicule un confort thermique optimisé, pour une énergie consommée minimale.

D'une manière générale, le rendement global de ladite installation repose de façon non négligeable sur les rendements respectifs des échangeurs thermiques que comporte l'installation. En effet, il est constamment recherché par les concepteurs d'installation de ventilation, de chauffage et/ou de climatisation des moyens pour optimiser les échanges de chaleur entre d'une part le premier fluide caloporteur qui circule à l'intérieur du radiateur et le premier flux d'air, et d'autre part entre le fluide réfrigérant qui circule à l'intérieur du refroidisseur de gaz et le deuxième fluide caloporteur à réchauffer.

Il est couramment admis que pour faciliter de tels échanges de chaleur, il est souhaitable que le débit du fluide caloporteur à l'intérieur des échangeurs thermiques respectifs de ladite installation soit le plus élevé possible, notamment supérieur à 1 000 l/h, et qu'une différence de température du fluide caloporteur en entrée et en sortie des dits échangeurs thermiques respectifs soit faible, par exemple de l'ordre de 5°C. Dans de telles conditions, le coefficient de performance « COP » de la boucle de climatisation est couramment de l'ordre de 1, ce qui est faible. Aussi, les concepteurs d'installations de ventilation, de chauffage et/ou de climatisation ont généralement fait le choix d'améliorer les performances thermiques des autres éléments de l'installation pour contrecarrer cet inconvénient.

Le document US 6 178 929 B1, qui est considéré comme l'art antérieur le plus proche, divulgue une installation d'un type connu.

### Objet de l'invention.

Un premier but de la présente invention est de proposer une installation de ventilation, de chauffage et/ou de climatisation d'un véhicule automobile comprenant une boucle de climatisation à l'intérieur de laquelle circule un fluide réfrigérant, tel qu'un fluide supercritique, et comprenant au moins un échangeur thermique pour réchauffer un premier flux d'air préalablement à sa délivrance à l'intérieur de l'habitacle, ladite installation offrant une puissance de chauffage satisfaisante pour modifier rapidement les paramètres aérothermiques de l'air contenu à l'intérieur de l'habitacle du véhicule, y compris dans des conditions extrêmement froides d'utilisation initiale de ladite installation, dans lesquelles l'air est initialement à une température de l'ordre de -10°C et dans lesquelles il est néanmoins souhaité de délivrer rapidement à l'intérieur de l'habitacle le premier flux d'air à une température de l'ordre de 50°C, une telle installation consommant néanmoins le moins d'énergie possible pour un confort thermique procuré donné, un coefficient de performance « COP » de ladite boucle étant souhaité le plus élevé possible, notamment supérieur à 3, voire tendant vers 4.

Un deuxième but de la présente invention est de proposer une telle installation dans laquelle le fluide réfrigérant en sortie de l'échangeur thermique présente une température la plus faible possible, notamment inférieure à 43°C.

Un troisième but de la présente invention est de proposer un tel échangeur thermique qui soit aussi adaptable à une relativement quelconque installation de ventilation, de chauffage et/ou de climatisation, dans laquelle la motorisation du véhicule est susceptible d'être thermique, électrique ou hybride, dans laquelle le confort thermique souhaité à l'intérieur de l'habitacle est susceptible d'être varié, à savoir nécessitant le traitement thermique de une à plusieurs zones de l'habitacle, notamment 4 zones distinctes, et enfin dans laquelle l'encombrement de ladite installation est souhaité le plus restreint possible, notamment sous une planche de bord que loge l'habitacle du véhicule.

L'installation de la présente invention est une installation de ventilation, de chauffage et/ou de climatisation d'un habitacle d'un véhicule automobile. Ladite installation comprend au moins un échangeur thermique à l'intérieur duquel circule un fluide caloporteur FC.

Selon la présente invention, ladite installation est équipée d'au moins un moyen pour faire circuler le fluide caloporteur FC à un débit compris entre 40 l/h et 200 l/h, de telle sorte qu'une différence de température du fluide caloporteur FC entre une sortie et une entrée de l'échangeur thermique est supérieure à 45°C.

Ces dispositions sont telles que l'échangeur thermique de l'installation, indifféremment participant d'une boucle de climatisation ou d'un circuit de refroidissement de cette dernière, contribue à ce que le rendement de l'installation soit optimisé, et plus particulièrement à ce que le « COP » de la dite boucle soit supérieur à 3, voire tende vers 4. Ce résultat est atteint en faisant un premier choix d'un faible débit du fluide caloporteur FC, de l'ordre de 40 l/h à 200 l/h, associé à un deuxième choix d'une importante différence de température du fluide caloporteur FC entre une sortie et une entrée de l'échangeur thermique, notamment supérieure à 45°C.

Ledit moyen est avantageusement constitutif d'un circuit d'acheminement du fluide caloporteur FC.

Selon une première forme de réalisation, ledit moyen comprend une pompe à débit variable et contrôlé participante du circuit d'acheminement.

Selon une deuxième forme de réalisation, ledit moyen comprend une pluralité de chemins de circulation du fluide caloporteur FC qui sont ménagés à l'intérieur de l'échangeur thermique.

Suivant l'invention, l'échangeur thermique est constitué d'un refroidisseur de gaz participant d'une boucle de climatisation à l'intérieur de laquelle circule un fluide réfrigérant FR.

Le refroidisseur de gaz est par exemple constitutif du circuit d'acheminement.

Le circuit d'acheminement comporte par exemple encore une dérivation sur laquelle est installé le refroidisseur de gaz.

La dérivation comprend avantageusement :
- un premier canal s'étendant entre une vanne trois-voies et un premier point de jonction P1 qui est situé sur le circuit d'acheminement en amont du radiateur selon le sens d'écoulement du fluide caloporteur FC à l'intérieur du circuit d'acheminement,
- un deuxième canal s'étendant entre la vanne trois-voies et un deuxième point de jonction P2 qui est situé sur le circuit d'acheminement en aval du radiateur selon le sens d'écoulement du fluide caloporteur FC à l'intérieur du circuit d'acheminement, et
- un troisième canal s'étendant entre la vanne trois-voies et un troisième point de jonction P3 qui est situé sur le circuit d'acheminement en aval du radiateur selon le sens d'écoulement du fluide caloporteur FC à l'intérieur du circuit d'acheminement.

Le refroidisseur de gaz est préférentiellement disposé sur le troisième canal. Ledit moyen est dans ce cas constitué de la vanne trois-voies, d'une première vanne disposée sur le circuit d'acheminement en aval du troisième point P3 selon le sens d'écoulement du fluide caloporteur FC à l'intérieur du circuit d'acheminement et d'une deuxième vanne disposée sur le troisième canal en amont du troisième point P3 selon le sens d'écoulement du fluide caloporteur FC à l'intérieur du circuit d'acheminement.

Le fluide caloporteur FC est préférentiellement constitué d'un mélange d'eau et de glycol tandis que le fluide réfrigérant FR est préférentiellement un fluide supercritique.

Le circuit d'acheminement comporte de préférence un moteur du véhicule.

Le refroidisseur de gaz comporte avantageusement un circuit de circulation du fluide réfrigérant FR qui est à contre-courant des chemins de circulation du fluide caloporteur FC.

Le circuit de circulation du fluide réfrigérant FR est préférentiellement à simple passage vis-à-vis des chemins de circulation du fluide caloporteur FC.

### Description des figures.

La présente invention sera mieux comprise, et des détails en relevant apparaîtront, à la lecture de la description qui va être faite de variantes de réalisation en relation avec les figures des planches annexées, dans lesquelles :
Les fig.1 et fig.2 sont des illustrations schématiques de variantes respectives de réalisation d'une installation de ventilation, de chauffage et/ou de climatisation selon la présente invention.
La fig.3 est un diagramme de Mollier représentant un cycle thermodynamique d'un fluide réfrigérant circulant à l'intérieur d'une boucle de climatisation constitutive des installations illustrées sur les figures précédentes.
La fig.4 est une illustration schématique partielle d'une forme de réalisation d'un moyen pour faire circuler un fluide caloporteur à un débit de 40 l/h à 200 l/h à l'intérieur d'un échangeur thermique constitutif des installations illustrées sur les fig.1 et fig.2.
La fig.5 est une illustration schématique partielle d'un refroidisseur de gaz muni du moyen illustré sur la fig.4.

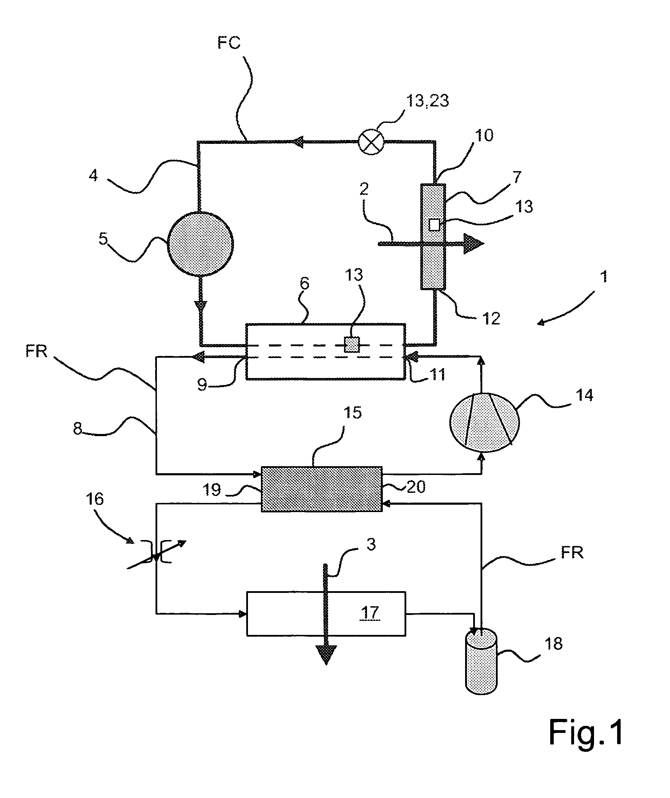

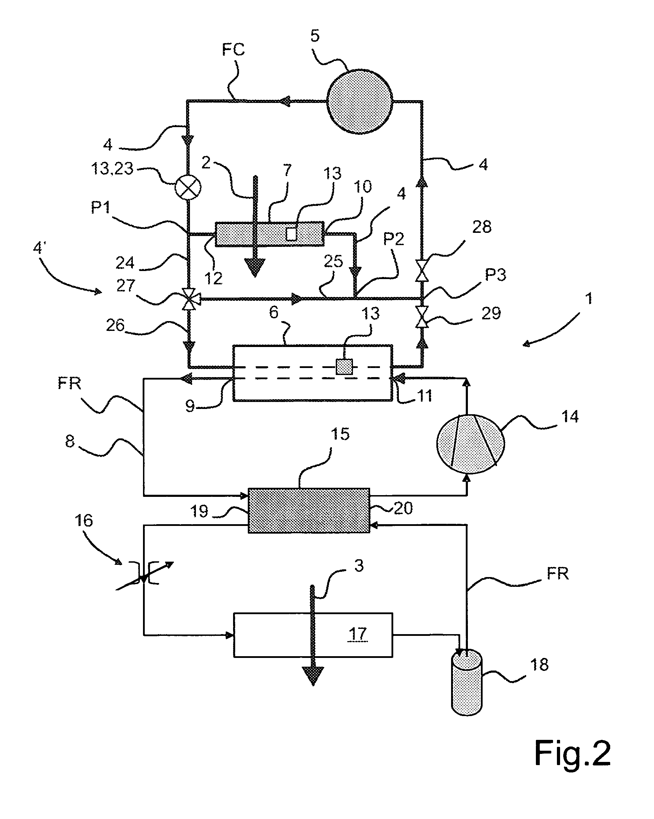

Sur les fig.1 et fig.2, un véhicule automobile est équipé d'une installation 1 de ventilation, de chauffage et/ou de climatisation pour modifier les paramètres aérothermiques de l'air contenu à l'intérieur de l'habitacle. Cette modification est obtenue à partir de la délivrance à l'intérieur de l'habitacle d'un premier flux d'air 2, destiné à être réchauffé, et/ou d'un deuxième flux d'air 3, destiné à être refroidi.

Ladite installation 1 comporte un circuit d'acheminement 4 d'un fluide caloporteur FC, eau et/ou glycol notamment. Le circuit d'acheminement 4 comporte des éléments 5,6 dissipant de la chaleur au cours de leur mise en fonctionnement et au moins un radiateur 7 pour évacuer la chaleur collectée par le fluide caloporteur FC auprès desdits éléments 5,6. Les éléments 5,6 sont par exemple un moteur 5 du véhicule, indifféremment thermique, électrique ou hybride, et un refroidisseur de gaz 6 d'une boucle de climatisation 8 que comporte également l'installation 1. Le radiateur 7 est destiné à réchauffer le premier flux d'air 2 préalablement à sa délivrance à l'intérieur de l'habitacle. Le refroidisseur de gaz 6 est quant à lui destiné à récupérer de la chaleur en provenance d'un fluide réfrigérant FR qui circule à l'intérieur de la boucle de climatisation 8, et plus particulièrement à l'intérieur du refroidisseur de gaz 6.

Pour procurer à ladite installation 1 une efficacité optimisée, il est primordial que les échanges thermiques respectifs effectués tant par l'intermédiaire du radiateur 7 que par l'intermédiaire du refroidisseur de gaz 6 soient eux-mêmes les plus satisfaisants possible. Il était admis jusqu'à présent que de tels échanges thermiques étaient optimisés si et seulement si le fluide caloporteur FC circulait à l'intérieur du radiateur 7 et/ou du refroidisseur de gaz 6 à un débit conséquent, notamment supérieur à 1 000 l/h.

Il apparaît selon la présente invention, que dans les conditions d'utilisation susvisées du radiateur 7 et du refroidisseur de gaz 6, les échanges thermiques tant à l'intérieur du radiateur 7 que du refroidisseur de gaz 6 sont optima à condition que le débit du fluide caloporteur FC qui les parcourt soit compris entre 40 l/h et 200 l/h. Une telle condition n'est pas à considérer comme un choix dimensionnel arbitraire et/ou issu du fruit du hasard, mais comme relevant d'une activité inventive s'érigeant à l'encontre des habitudes prises dans le domaine. En effet, les concepteurs de la présente invention ont fait un choix opposé à celui communément enseigné par l'art antérieur, en privilégiant une circulation à faible débit du fluide caloporteur FC à l'intérieur du radiateur 7 et du refroidisseur de gaz 6 et conjointement une importante différence de température du fluide caloporteur FC entre une sortie 9,10 et une entrée 11,12 respectives du refroidisseur de gaz 6 et du radiateur 7, cette différence étant supérieure à 45°C, et préférentiellement comprise entre 60°C et 80°C.

Il en découle finalement qu'une installation 1 de ventilation, de chauffage et/ou de climatisation selon la présente invention est équipée d'au moins un moyen 13 pour faire circuler le fluide caloporteur FC à un débit de 40 l/h à 200 l/h, en vue de faciliter lesdits échanges thermiques, afin d'améliorer l'efficacité de ladite installation 1, et en particulier pour que le fluide réfrigérant FR circulant à l'intérieur du refroidisseur de gaz 6 subisse un cycle thermodynamique ABCD, illustré sur la fig.2, dont le coefficient de performance est supérieur à 3, voire tende vers 4.

La boucle de climatisation 8 comprend en sus du refroidisseur de gaz 6, un compresseur 14, un échangeur de chaleur interne 15, un organe de détente 16, un évaporateur 17 et un accumulateur 18 à l'intérieur desquels circule le fluide réfrigérant FR, tel qu'un fluide supercritique, R744 ou analogue notamment.

Le fluide réfrigérant circule depuis le compresseur 14 vers le refroidisseur de gaz 6, puis vers une première branche 19 de l'échangeur de chaleur interne 15, puis vers l'organe de détente 16, ensuite vers l'évaporateur 17, puis vers l'accumulateur 18, et enfin vers une deuxième branche 20 de l'échangeur de chaleur interne 15, pour retourner au compresseur 14.

Le compresseur 14 est destiné à recevoir le fluide réfrigérant FR à l'état gazeux et à le comprimer pour le porter à haute pression. Le refroidisseur de gaz 6 est apte à refroidir le fluide réfrigérant FR comprimé, à pression relativement constante, en cédant de la chaleur au fluide caloporteur FC. L'échangeur de chaleur interne 15 est configuré de manière à ce que le fluide réfrigérant FR circulant à l'intérieur de la première branche 19 puisse céder de la chaleur au fluide réfrigérant FR circulant à l'intérieur de la deuxième branche 20. A cet effet, le fluide réfrigérant FR circule en sens opposé à l'intérieur de la première branche 19 et de la deuxième branche 20. L'organe de détente 16 est à même d'abaisser la pression du fluide réfrigérant FR en sortie du refroidisseur de gaz 6 en l'amenant au moins en partie à l'état liquide. L'évaporateur 17 est quant à lui propre à faire passer à l'état gazeux le fluide réfrigérant FR à l'état liquide provenant de l'organe de détente 16, à pression relativement constante, en refroidissant le deuxième flux d'air 3 qui traverse l'évaporateur 17. L'accumulateur 18 est destiné à recueillir un reliquat de fluide réfrigérant FR à l'état liquide en sortie de l'évaporateur 17, de telle sorte que seul le fluide réfrigérant FR à l'état gazeux soit aspiré par le compresseur 14.

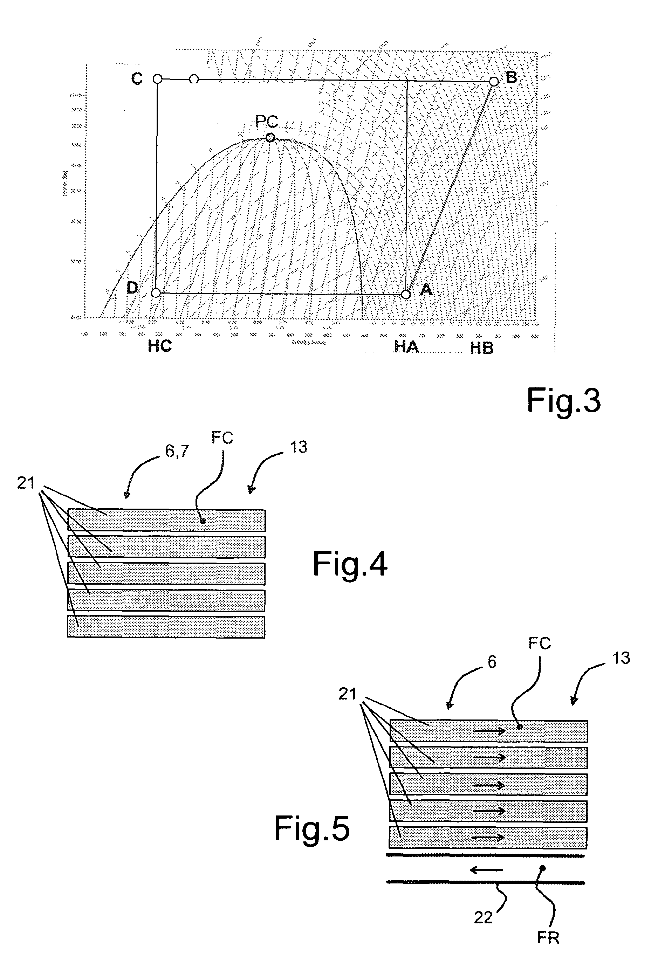

Sur la fig.3, un diagramme de Mollier représente le cycle thermodynamique ABCD subi par le fluide réfrigérant FR circulant à l'intérieur de boucle de climatisation 8. Le segment AB représente la compression isentropique du fluide réfrigérant FR par le compresseur 14. Le segment BC illustre la quantité de chaleur cédée par le refroidisseur de gaz 6. Le segment CD symbolise la détente isenthalpique du fluide réfrigérant FR à l'intérieur de l'organe de détente 16. Le segment DA représente la quantité de froid cédé par l'évaporateur 17 au deuxième flux d'air 3.

Un coefficient de performance de la boucle de climatisation 8, couramment dénommé « COP », est défini comme le rapport entre la quantité de froid produite et le travail fourni, soit le rapport (HB - HC) / (HB - HA), dans lequel HA est la valeur de l'enthalpie du point A, HB est la valeur de l'enthalpie du point B et HC est la valeur de l'enthalpie du point C. La boucle de climatisation 8 comprenant un refroidisseur de gaz 6 selon la présente invention présente un « COP » supérieur à 3, voire tendant vers 4. Le point de fonctionnement de ladite boucle 8 est déterminé par une section basse pression de cette dernière 8 qui s'étend de l'organe de détente 16 au compresseur 14, selon le sens d'écoulement du fluide réfrigérant FR à l'intérieur de la boucle de climatisation 8. Le point de fonctionnement de cette dernière 8 est également déterminé par la température d'évaporation souhaitée du fluide réfrigérant FR et des caractéristiques du compresseur 14, tels que son rendement et/ou la température maximale admise du fluide réfrigérant FR à la décharge. De telles déterminations induisent des conditions d'état de pression et de température du fluide réfrigérant FR en entrée et en sortie du compresseur 14. Ces conditions d'état s'avèrent être de véritables contraintes pour les concepteurs d'installations 1 de ventilation, de chauffage et/ou de climatisation qui laissent peu de marge pour dimensionner ces dernières de manière à minimiser la différence (HB - HA), pour maximaliser le « COP ».

Finalement, il apparaît que pour augmenter la chaleur recueillie par le fluide caloporteur FC au niveau du refroidisseur de gaz 6, autrement dit pour obtenir un « COP » le plus élevé possible, il est nécessaire d'abaisser au maximum la température du fluide réfrigérant FR en sortie du refroidisseur de gaz 6, c'est-à-dire de maximaliser la différence (HB - HC). Cette nécessité s'avère d'autant plus indispensable que la variation d'enthalpie associée à un refroidissement du fluide réfrigérant FR est plus importante entre 20°C et 60°C qu'entre 60°C et 100°C, en raison de la forte inclinaison des courbes isothermes sur l'horizontal au droit du point critique PC.

A partir de ce choix d'équiper ladite installation 1 dudit moyen 13 pour faire circuler le fluide caloporteur FC à un débit compris entre 40 l/h et 200 l/h, les concepteurs de la présente invention proposent diverses variantes de réalisation du moyen 13 qui peuvent être appliquées à l'installation 1, indifféremment indépendamment ou en combinaison.

En se reportant à nouveau sur les fig.1 et fig.2, et selon une première variante de réalisation dudit moyen 13, ce dernier 13 est constitué d'une pompe 23 à débit variable et contrôlée qui est constitutive du circuit d'acheminement 4 et qui est apte à maintenir la circulation du fluide caloporteur FC à un débit compris entre 40 l/h et 200 l/h.

Sur la fig.1, la pompe 23, le moteur 5, le refroidisseur de gaz 6 et le radiateur 7 sont disposés en série sur le circuit d'acheminement 4 dans l'ordre qui vient d'être énoncé. Selon d'autres formes de réalisation l'ordre est susceptible d'être différent.

Sur la fig.2, le circuit d'acheminement 4 comporte une dérivation 4' sur laquelle est installé le refroidisseur de gaz 6. La dérivation 4' comprend :
- un premier canal 24 s'étendant entre une vanne trois-voies 27 et un premier point de jonction P1 qui est situé sur le circuit d'acheminement 4 en amont du radiateur 7 selon le sens d'écoulement du fluide caloporteur FC à l'intérieur du circuit d'acheminement 4,
- un deuxième canal 25 s'étendant entre la vanne trois-voies 27 et un deuxième point de jonction P2 qui est situé sur le circuit d'acheminement 4 en aval du radiateur 7 selon le sens d'écoulement du fluide caloporteur FC à l'intérieur du circuit d'acheminement 4, et
- un troisième canal 26 s'étendant entre la vanne trois-voies 27 et un troisième point de jonction P3 qui est situé sur le circuit d'acheminement 4 en aval du radiateur 7 selon le sens d'écoulement du fluide caloporteur FC à l'intérieur du circuit d'acheminement 4. Le refroidisseur de gaz 6 est disposé sur le troisième canal 26.

Selon une deuxième variante de réalisation dudit moyen 13, ce dernier 13 est constitué de la vanne trois-voies 27, d'une première vanne 28 disposée sur le circuit d'acheminement 4 en aval du troisième point P3 selon le sens d'écoulement du fluide caloporteur FC à l'intérieur du circuit d'acheminement 4 et d'une deuxième vanne 29 disposée sur le troisième canal 26 en amont du troisième point P3 selon le sens d'écoulement du fluide caloporteur FC à l'intérieur du circuit d'acheminement 4.

En se reportant aussi sur les fig.4 et fig.5, et selon une troisième variante de réalisation dudit moyen 13, ce dernier 13 est constitué d'une pluralité de chemins de circulation 21 du fluide caloporteur FC à l'intérieur de l'échangeur thermique 6,7, indifféremment refroidisseur de gaz 6 et radiateur 7.

Sur la fig.5, le refroidisseur de gaz 6 comporte un circuit 22 de circulation du fluide réfrigérant FR qui est à contre-courant et à simple passage par rapport aux chemins de circulation 21 du fluide caloporteur FC. Autrement dit, à l'intérieur du refroidisseur de gaz 6, le fluide réfrigérant FR circule en sens opposé à celui du fluide caloporteur FC, cette circulation à contre-sens étant effectuée une seule fois.

Ces dispositions sont telles que la dite installation 1 présente les caractéristiques suivantes illustrées par les quatre premières colonnes du tableau ci-dessous relatives à quatre modes respectifs de fonctionnement de la dite installation 1, la cinquième colonne présentant les caractéristiques d'une installation de l'art antérieur.

| | Unités | Mode 1 | Mode 2 | Mode 3 | Mode 4 | Art Antérieur |
|---|---|---|---|---|---|---|
| Puissance de chauffe du radiateur | kW | 5,6 | 5 | 4,5 | 4 | 5,6 |
| | | | | | | |
| Débit du fluide FC | l/h | 120 | 80 | 60 | 45 | 1000 |
| Différence de température Entrée-Sortie du fluide FC | °C | 46,7 | 62,5 | 75 | 88,9 | 5,6 |
| Température Entrée du fluide FC | °C | 60 | 70 | 75 | 85 | 48 |
| Température Sortie du fluide FC | °C | 13,3 | 7,5 | 0 | -3,9 | 42,4 |
| | | | | | | |
| Température Entrée du fluide FR | °C | 122 | 122 | 122 | 122 | |
| Température Sortie du fluide FR | °C | > 14 | > 7,5 | > 0 | > 3 | > 43 |
| | | | | | | |
| Débit d'air traversant le radiateur | kg/h | 300 | 300 | 300 | 300 | 300 |
| Différence de température Entrée-Sortie de l'air | °C | 67,2 | 60 | 54 | 48 | 67,2 |
| Température Entrée de l'air | °C | -20 | -20 | -20 | -20 | -20 |
| Température Sortie de l'air | °C | 47,2 | 40 | 34 | 28 | 47,2 |

Dans lequel tableau le fluide FC concerne le fluide caloporteur FC circulant à l'intérieur du circuit d'acheminement 4 tandis que le fluide FR concerne le fluide réfrigérant FR circulant à l'intérieur de la boucle de climatisation 8.

En comparant par exemple, le mode de fonctionnement d'une installation selon l'art antérieur et le premier mode de fonctionnement d'une installation 1 selon la présente invention, il apparaît clairement que la température du fluide réfrigérant FR en sortie du refroidisseur de gaz 6 est beaucoup plus basse dans le cadre de fonctionnement du mode 1 que dans celui de fonctionnement du mode de l'art antérieur. Il en découle que le « COP » du mode 1 est notablement supérieur à celui du mode de l'art antérieur.

## Revendications

1. Installation (1) de ventilation, de chauffage et/ou de climatisation d'un habitacle d'un véhicule automobile, ladite installation (1) comprenant au moins un échangeur thermique (6,7) à l'intérieur duquel circule un fluide caloporteur FC, **caractérisée en ce que** ladite installation (1) est équipée d'au moins un moyen (13) pour faire circuler le fluide caloporteur FC à un débit compris entre 40 l/h et 200 l/h, de telle sorte qu'une différence de température du fluide caloporteur FC entre une sortie (9,10) et une entrée (11,12) de l'échangeur thermique (6,7) est supérieure à 45°C et **en ce que** l'échangeur thermique (6) est constitué d'un refroidisseur de gaz participant à une boucle de climatisation (8) à l'intérieur de laquelle circule un fluide réfrigérant FR.

2. Installation (1) selon la revendication précédente, **caractérisée en ce que** ledit moyen (13) est constitutif d'un circuit d'acheminement (4) du fluide caloporteur FC.

3. Installation (1) selon la revendication 2, **caractérisée en ce que** ledit moyen (13) comprend une pompe (23) à débit variable et contrôlé participante du circuit d'acheminement (4).

4. Installation (1) selon l'une quelconque des revendications 2 et 3, **caractérisée en ce que** ledit moyen (13) comprend une pluralité de chemins (21) de circulation du fluide caloporteur FC qui sont ménagés à l'intérieur de l'échangeur thermique (6,7).

5. Installation (1) selon l'une quelconque des revendications 2 à 4, **caractérisée en ce que** le refroidisseur de gaz (6) est constitutif du circuit d'acheminement (4).

6. Installation (1) selon la revendication 5, **caractérisée en ce que** le circuit d'acheminement (4) comporte une dérivation (4') sur laquelle est installé le refroidisseur de gaz (6).

7. Installation (1) selon la revendication 6, **caractérisée en ce que** la dérivation (4') comprend :
- un premier canal (24) s'étendant entre une vanne trois-voies (27) et un premier point de jonction P1 qui est situé sur le circuit d'acheminement (4) en amont du radiateur (7) selon le sens d'écoulement du fluide caloporteur FC à l'intérieur du circuit d'acheminement (4),
- un deuxième canal (25) s'étendant entre la vanne trois-voies (27) et un deuxième point de jonction P2 qui est situé sur le circuit d'acheminement (4) en aval du radiateur (7) selon le sens d'écoulement du fluide caloporteur FC à l'intérieur du circuit d'acheminement (4), et
- un troisième canal (26) s'étendant entre la vanne trois-voies (27) et un troisième point de jonction P3 qui est situé sur le circuit d'acheminement (4) en aval du radiateur (7) selon le sens d'écoulement du fluide caloporteur FC à l'intérieur du circuit d'acheminement (4).

8. Installation (1) selon la revendication 7, **caractérisée en ce que** le refroidisseur de gaz (6) est disposé sur le troisième canal (26).

9. Installation (1) selon l'une quelconques des revendications 7 ou 8, **caractérisée en ce que** ledit moyen (13) est constitué de la vanne trois-voies (27), d'une première vanne (28) disposée sur le circuit d'acheminement (4) en aval du troisième point P3 selon le sens d'écoulement du fluide caloporteur FC à l'intérieur du circuit d'acheminement (4) et d'une deuxième vanne (29) disposée sur le troisième canal (26) en amont du troisième point P3 selon le sens d'écoulement du fluide caloporteur FC à l'intérieur du circuit d'acheminement (4).

10. Installation (1) selon l'une quelconque des revendications précédentes, **caractérisée en ce que** le fluide caloporteur FC est constitué d'un mélange d'eau et de glycol.

11. Installation (1) selon l'une quelconques des revendications 1 à 10, **caractérisée en ce que** le fluide réfrigérant FR est un fluide supercritique.

12. Installation (1) selon la revendication 2, **caractérisée en ce que** le circuit d'acheminement (4) comporte un moteur (5) du véhicule.

13. Installation (1) selon la revendication 4, **caractérisée en ce que** le refroidisseur de gaz (6) comporte un circuit de circulation (22) du fluide réfrigérant FR qui est à contre-courant des chemins de circulation (21) du fluide caloporteur FC.

14. Installation (1) selon la revendication 13, **caractérisé en ce que** le circuit de circulation (22) du fluide réfrigérant FR est à simple passage vis-à-vis des chemins de circulation (21) du fluide caloporteur FC.

## Claims

1. System (1) for the heating, ventilation, and/or air conditioning of a motor vehicle passenger compartment, said system (1) comprising at least one heat exchanger (6, 7) through which there flows a heat-transfer fluid FC, said system (1) being **characterized in that** it is equipped with at least one means (13) for pumping the heat-transfer fluid FC at a flow rate of between 40 l/h and 200 l/h, in such a way that a temperature difference of the heat-transfer fluid FC between an outlet (9, 10) and an inlet (11, 12) of the heat exchanger (6, 7) is greater than 45°C, and **in that** the heat exchanger (6) is a gas cooler participating in an air-conditioning loop (8) around which a refrigerant FR flows.

2. System (1) according to the preceding claim, **characterized in that** said means (13) is a constituent of a conveying circuit (4) for the heat-transfer fluid FC.

3. System (1) according to Claim 2, **characterized in that** said means (13) comprises a pump (23) with a variable and controlled flow rate participating in the conveying circuit (4).

4. System (1) according to either of Claims 2 and 3, **characterized in that** said means (13) comprises a plurality of flow paths (21) for the heat-transfer fluid FC which are formed within the heat exchanger (6, 7).

5. System (1) according to any one of Claims 2 to 4, **characterized in that** the gas cooler (6) is a constituent of the conveying circuit (4).

6. System (1) according to Claim 5, **characterized in that** the conveying circuit (4) comprises a branch (4') on which the gas cooler (6) is installed.

7. System (1) according to Claim 6, **characterized in that** the branch (4') comprises:
- a first channel (24) extending between a three-way valve (27) and a first junction point P1 located on the conveying circuit (4) upstream of the radiator (7) in the direction of flow of the heat-transfer fluid FC within the conveying circuit (4),
- a second channel (25) extending between the three-way valve (27) and a second junction point P2 located on the conveying circuit (4) downstream of the radiator (7) in the direction of flow of the heat-transfer fluid FC within the conveying circuit (4), and
- a third channel (26) extending between the three-way valve (27) and a third junction point P3 located on the conveying circuit (4) downstream of the radiator (7) in the direction of flow of the heat-transfer fluid FC within the conveying circuit (4).

8. System (1) according to Claim 7, **characterized in that** the gas cooler (6) is arranged on the third channel (26).

9. System (1) according to either of Claims 7 and 8, **characterized in that** said means (13) consists of:
the three-way valve (27); a first valve (28) arranged on the conveying circuit (4) downstream of the third point P3 in the direction of flow of the heat-transfer fluid FC within the conveying circuit (4); and a second valve (29) arranged on the third channel (26) upstream of the third point P3 in the direction of flow of the heat-transfer fluid FC within the conveying circuit (4).

10. System (1) according to any one of the preceding claims, **characterized in that** the heat-transfer fluid FC is a mixture of water and glycol.

11. System (1) according to any one of Claims 1-10, **characterized in that** the refrigerant FR is a supercritical fluid.

12. System (1) according to Claim 2, **characterized in that** the conveying circuit (4) comprises an engine or motor (5) of the vehicle.

13. System (1) according to Claim 4, **characterized in that** the gas cooler (6) comprises a flow circuit (22) for the refrigerant FR that is counter-current to the flow paths (21) of the heat-transfer fluid FC.

14. System (1) according to Claim 13, **characterized in that** the flow circuit (22) of the refrigerant FR is single-passage vis-à-vis the flow paths (21) of the heat-transfer fluid FC.

## Patentansprüche

1. Lüftungs-, Heizungs- und/oder Klimaanlage (1) eines Innenraums eines Kraftfahrzeugs, wobei die Anlage (1) mindestens einen Wärmetauscher (6, 7) enthält, in dem ein Wärmeträgerfluid FC strömt, **dadurch gekennzeichnet, dass** die Anlage (1) mit mindestens eine Einrichtung (13) ausgestattet ist, um das Wärmeträgerfluid FC mit einem Durchsatz zwischen 40 l/h und 200 l/h strömen zu lassen, derart, dass ein Temperaturunterschied des Wärmeträgerfluids FC zwischen einem Ausgang (9, 10) und einem Eingang (11, 12) des Wärmetauschers (6, 7) höher als 45°C ist, und dass der Wärmetauscher (6) aus einem Gaskühler besteht, der Teil eines Klimatisierungskreislaufs (8) ist, in dem ein Kühlfluid FR strömt.

2. Anlage (1) nach dem vorhergehenden Anspruch, **dadurch gekennzeichnet, dass** die Einrichtung (13) wesentlicher Bestandteil eines Beförderungskreislaufs (4) des Wärmeträgerfluids FC ist.

3. Anlage (1) nach Anspruch 2, **dadurch gekennzeichnet, dass** die Einrichtung (13) eine Pumpe (23) mit variablem und kontrolliertem Durchsatz enthält, die Teil des Beförderungskreislaufs (4) ist.

4. Anlage (1) nach einem der Ansprüche 2 und 3, **dadurch gekennzeichnet, dass** die Einrichtung (13) eine Vielzahl von Strömungswegen (21) des Wärmeträgerfluids FC enthält, die im Inneren des Wärmetauschers (6, 7) ausgebildet sind.

5. Anlage (1) nach einem der Ansprüche 2 bis 4, **dadurch gekennzeichnet, dass** der Gaskühler (6) wesentlicher Bestandteil des Beförderungskreislaufs (4) ist.

6. Anlage (1) nach Anspruch 5, **dadurch gekennzeichnet, dass** der Beförderungskreislauf (4) eine Ableitung (4') aufweist, auf der der Gaskühler (6) installiert ist.

7. Anlage (1) nach Anspruch 6, **dadurch gekennzeichnet, dass** die Ableitung (4') enthält:
- einen ersten Kanal (24), der sich zwischen einem Dreiwegeventil (27) und einem ersten Verbindungspunkt P1 erstreckt, der sich auf dem Beförderungskreislauf (4) stromaufwärts vor dem Kühler (7) gemäß der Strömungsrichtung des Wärmeträgerfluids FC im Inneren des Beförderungskreislaufs (4) befindet,
- einen zweiten Kanal (25), der sich zwischen dem Dreiwegeventil (27) und einem zweiten Verbindungspunkt P2 erstreckt, der sich auf dem Beförderungskreislauf (4) stromabwärts hinter dem Kühler (7) gemäß der Strömungsrichtung des Wärmeträgerfluids FC im Inneren des Beförderungskreislaufs (4) befindet, und
- einen dritten Kanal (26), der sich zwischen dem Dreiwegeventil (27) und einem dritten Verbindungspunkt P3 erstreckt, der sich auf dem Beförderungskreislauf (4) stromabwärts hinter dem Kühler (7) gemäß der Strömungsrichtung des Wärmeträgerfluids FC im Inneren des Beförderungskreislaufs (4) befindet.

8. Anlage (1) nach Anspruch 7, **dadurch gekennzeichnet, dass** der Gaskühler (6) auf dem dritten Kanal (26) angeordnet ist.

9. Anlage (1) nach einem der Ansprüche 7 oder 8, **dadurch gekennzeichnet, dass** die Einrichtung (13) aus dem Dreiwegeventil (27), einem ersten Ventil (28), das auf dem Beförderungskreislauf (4) stromabwärts hinter dem dritten Punkt P3 gemäß der Strömungsrichtung des Wärmeträgerfluids FC im Inneren des Beförderungskreislaufs (4) angeordnet ist, und einem zweiten Ventil (29) besteht, das auf dem dritten Kanal (26) stromaufwärts vor dem dritten Punkt P3 gemäß der Strömungsrichtung des Wärmeträgerfluids FC im Inneren des Beförderungskreislaufs (4) angeordnet ist.

10. Anlage (1) nach einem der vorhergehenden Ansprüche, **dadurch gekennzeichnet, dass** das Wärmeträgerfluid FC aus einer Mischung von Wasser und Glykol besteht.

11. Anlage (1) nach einem der Ansprüche 1 bis 10, **dadurch gekennzeichnet, dass** das Kühlfluid FR ein superkritisches Fluid ist.

12. Anlage (1) nach Anspruch 2, **dadurch gekennzeichnet, dass** der Beförderungskreislauf (4) einen Motor (5) des Fahrzeugs aufweist.

13. Anlage (1) nach Anspruch 4, **dadurch gekennzeichnet, dass** der Gaskühler (6) einen Strömungskreislauf (22) des Kühlfluids FR aufweist, der im Gegenstrom zu den Strömungswegen (21) des Wärmeträgerfluids FC ist.

14. Anlage (1) nach Anspruch 13, **dadurch gekennzeichnet, dass** der Strömungskreislauf (22) des Kühlfluids FR einen einfachen Durchgang gegenüber den Strömungswegen (21) des Wärmeträgerfluids FC hat.
